# EUROPÄISCHE PATENTSCHRIFT

(11) **EP 3 300 406 B1**
(45) Veröffentlichungstag und Bekanntmachung des Hinweises auf die Patenterteilung: **12.07.2023**
(21) Anmeldenummer: 17192965.6
(22) Anmeldetag: 25.09.2017
(51) Int. Cl.: G07C 5/00, H04L 9/40, H04W 12/069

(54) **AUFBAU EINER VERBINDUNG ZWISCHEN EINEM MOBILEN GERÄT UND EINER TELEMATIKEINHEIT EINES NUTZFAHRZEUGS**
ESTABLISHMENT OF A CONNECTION BETWEEN A MOBILE DEVICE AND A TELEMATICS UNIT OF A COMMERCIAL VEHICLE
ÉTABLISSEMENT D'UNE CONNEXION ENTRE UN APPAREIL MOBILE ET UNE UNITÉ TÉLÉMATIQUE D'UN VÉHICULE UTILITAIRE

(30) Priorität: 26.09.2016 DE 102016118114
(43) Veröffentlichungstag der Anmeldung: 28.03.2018
(73) Patentinhaber: Schmitz Cargobull AG, 48341 Altenberge (DE)
(72) Erfinder: Schulte, Nils, 48147 Münster (DE)
(74) Vertreter: Cohausz & Florack

(56) Entgegenhaltungen:
- DE-A1-102014 010 752
- US-B2- 7 548 744
- US-B2- 8 918 232
- Anonymous: "IEEE 802.11i-2004 - Wikipedia", , 12 April 2016 (2016-04-12), XP055628845, Retrieved from the Internet: URL:https://en.wikipedia.org/w/index.php?t itle=IEEE_802.11i-2004&oldid=714873605 [retrieved on 2019-10-04]

## Beschreibung

### Gebiet

Beispielhafte Ausführungsformen der Erfindung betreffen den Aufbau einer Verbindung zwischen einem mobilen Gerät und einer Telematikeinheit eines Nutzfahrzeugs über ein erstes drahtloses Kommunikationsnetzwerk.

### Hintergrund

Im Stand der Technik sind Telematikeinheiten für Nutzfahrzeuge bekannt, mit denen Zustandsinformationen des Nutzfahrzeugs erfasst und beispielsweise über ein Mobilfunknetzwerk an einen entfernten Server eines Telematikdienstes kommuniziert werden können. Über eine von dem Server bereitgestellte Benutzeroberfläche kann auf die Zustandsinformationen zugegriffen und beispielsweise der Zustand des Nutzfahrzeugs, die Route des Nutzfahrzeugs und/oder die Umgebungsparameter der von dem Nutzfahrzeug transportierten Gütern überwacht werden. Wenn sich das Nutzfahrzeug jedoch in einem Bereich ohne Mobilfunknetzabdeckung oder innerhalb eines Tunnels oder Gebäudes befindet, können keine aktuellen Zustandsinformationen an den Server des Telematikdienstes übertragen werden.

Die Patentanmeldung DE 10 2014 010752 A1 beschreibt beispielsweise ein Verfahren zum Aufbau einer drahtlosen Verbindung zwischen einem mobilen Kommunikationsgerät einerseits und einem Kommunikationsmodul eines Fahrzeugs mit Kennzeichen andererseits. Nach diesem Verfahren sind auf einem Datenbank-Server außerhalb des mobilen Kommunikationsgerätes Zugriffsrechte abgelegt, nämlich Verknüpfungen zwischen Fahrzeug-Kennzeichen einerseits und Benutzer-Kennzeichen andererseits, sowie zum Aufbau der drahtlosen Verbindung erforderliche Daten.

Das Patent US 7 548 744 B2 betrifft ein System und Verfahren, die eine sichere Authentifizierung eines drahtlosen Kommunikationskanals für ein Fahrzeugtelematikgerät bereitstellen. Das Verfahren beinhaltet Erkennen eines drahtlosen Zugangspunkts innerhalb der Funkreichweite eines Telematikgeräts, Anfordern von Authentifizierungsinformationen für den Zugangspunkt über einen ersten sicheren Kommunikationskanal zu einem Callcenter, Empfangen von Authentifizierungsinformationen für den drahtlosen Zugangspunkt vom Callcenter über den ersten sicheren Kommunikationskanal und Bereitstellen von Authentifizierungsinformationen für das Telematikgerät an den drahtlosen Zugangspunkt über einen zweiten sicheren Kommunikationskanal.

Das Patent US 8 918 232 B2 betrifft ein Verfahren und ein System zum Aufbauen einer kurzreichweitigen drahtlosen Kommunikation zwischen einer tragbaren Kommunikationsvorrichtung und einer Fahrzeugtelematikeinheit. In einigen Fällen kann die Kommunikation nach einem Trennungsereignis zwischen der Telematikeinheit und einem Drahtlosträgernetz aufgebaut werden.Die kurzreichweitige drahtlose Kommunikation kann Bluetooth und Wi-Fi Direct sowie andere geeignete Protokolle oder Technologien enthalten. Wenn die Kommunikaion aufgebaut worden ist, kann die Telematikeinheit einen Fahrzeugbefehl von der tragbaren Kommunikationsvorrichtung empfangen und den Befehl ausführen.

### Zusammenfassung einiger beispielhafter Ausführungsformen der Erfindung

Die vorliegende Erfindung hat sich daher unter anderem die Aufgabe gestellt, diese Probleme zu überwinden. Diese Aufgabe wird gelöst durch den Gegenstand der unabhängigen Ansprüche. Beispielhafte Ausführungsformen der Erfindung können unter anderem den abhängigen Ansprüchen entnommen werden.

Gemäß einem ersten Aspekt der Erfindung wird ein Verfahren zum Aufbauen einer Verbindung eines mobilen Geräts mit einer Telematikeinheit eines Nutzfahrzeugs über ein erstes drahtloses Kommunikationsnetzwerk offenbart, wobei das Verfahren Folgendes umfasst:
- Erfassen einer Telematikeinheitidentifizierungsinformation, wobei die Telematikeinheitidentifizierungsinformation durch einen optischen Sensor (16) erfasst wird;
- Identifizieren der Telematikeinheit zumindest teilweise basierend auf der Telematikeinheitidentifizierungsinformation;
- Erhalten einer ersten Authentifizierungsinformation, wobei die erste Authentifizierungsinformation durch Erfassen einer Benutzereingabe an dem mobilen Gerät (1) erhalten wird;
- Bestimmen eines Authentifizierungs- und/oder Verbindungsschlüssels zumindest teilweise basierend auf der erhaltenen Authentifizierungsinformation, wobei das Bestimmen des Authentifizierungs- und/oder Verbindungsschlüssels ferner auf der erfassten Telematikeinheitidentifizierungsinformation basiert;
- Erzeugen einer ersten Verbindungsaufbaunachricht zumindest teilweise basierend auf dem Authentifizierungs- und/oder Verbindungsschlüssel;
- Senden der ersten Verbindungsaufbaunachricht an die Telematikeinheit über das erste drahtlose Kommunikationsnetzwerk.

Das Verfahren gemäß dem ersten Aspekt der Erfindung wird durch das mobile Gerät ausgeführt.

Gemäß dem ersten Aspekt der Erfindung wird ferner ein mobiles Gerät offenbart, wobei das mobile Gerät eingerichtet ist zur Ausführung und/oder Steuerung des Verfahrens gemäß dem ersten Aspekt der Erfindung oder jeweilige Mittel zur Ausführung und/oder Steuerung der Schritte des Verfahrens gemäß dem ersten Aspekt der Erfindung umfasst. Dabei können entweder alle Schritte des Verfahrens von den Mitteln gesteuert werden, oder alle Schritte des Verfahrens von den Mitteln ausgeführt werden, oder ein oder mehrere Schritte von den Mitteln gesteuert und ein oder mehrere Schritte von den Mitteln ausgeführt werden. Verschiedene Schritte können optional von verschiedenen Mitteln ausgeführt oder gesteuert werden. Die Mittel können Hardware- und/oder Software-Komponenten umfassen.

Die Mittel können beispielsweise mindestens einen Speicher mit Programmanweisungen eines Computerprogramms (z.B. des Computerprogramms gemäß dem ersten Aspekt der Erfindung) und mindestens einen Prozessor ausgebildet zum Ausführen von Programmanweisungen aus dem mindestens einen Speicher umfassen. Dementsprechend soll gemäß dem ersten Aspekt der Erfindung auch ein mobiles Gerät offenbart verstanden werden, das zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, das mobile Gerät zu veranlassen, das Verfahren gemäß dem ersten Aspekt der Erfindung auszuführen und/oder zu steuern.

Alternativ oder zusätzlich können die Mittel ferner eine oder mehrere drahtlose Netzwerkschnittstellen (z.B. einen oder mehrere drahtlose Netzwerkadapter) und/oder eine oder mehrere Benutzerschnittstellen (z.B. eine Tastatur, eine Maus, einen Bildschirm, einen berührungsempfindlichen Bildschirm, einen Lautsprecher, ein Mikrofon, usw.) umfassen. Es versteht sich, dass das mobile Gerät auch andere nicht aufgeführte Mittel umfassen kann.

Das mobile Gerät gemäß dem ersten Aspekt der Erfindung entspricht beispielsweise dem mobilen Gerät in dem Verfahren gemäß dem ersten Aspekt der Erfindung.

Gemäß dem ersten Aspekt der Erfindung wird ferner ein Computerprogramm offenbart, wobei das Computerprogramm Programmanweisungen umfasst, die dazu ausgebildet sind, bei Ausführung durch mindestens einen Prozessor eine Vorrichtung (z.B. ein mobiles Gerät) zu veranlassen, das Verfahren gemäß dem ersten Aspekt auszuführen.

Das Computerprogramm gemäß dem ersten Aspekt der Erfindung ist beispielsweise auf einem computerlesbaren Speichermedium enthalten und/oder gespeichert. Unter einem computerlesbaren Speichermedium soll beispielsweise ein physisches und/oder berührbares Speichermedium verstanden werden.

Gemäß einem zweiten Aspekt der Erfindung wird ein Verfahren zum Aufbauen einer Verbindung einer Telematikeinheit eines Nutzfahrzeugs mit einem mobilen Gerät über ein erstes drahtloses Kommunikationsnetzwerk offenbart, wobei das Verfahren Folgendes umfasst:
- Bereitstellen, durch das Nutzfahrzeug (4) oder eine Komponente des Nutzfahrzeugs (4), einer Telematikeinheitidentifizierungsinformation als graphische Information zum Identifizieren eines drahtlosen Zugangspunkts der Telematikeinheit (2);
- Empfangen einer ersten Authentifizierungsinformation von einem entfernten Server über ein zweites drahtloses Kommunikationsnetzwerk;
- Empfangen einer ersten Verbindungsaufbaunachricht von einem mobilen Gerät über das erste drahtlose Kommunikationsnetzwerk;
- Bestimmen eines Authentifizierungs- und/oder Verbindungsschlüssels zumindest teilweise basierend auf der empfangenen ersten Authentifizierungsinformation, wobei das Bestimmen des Authentifizierungs- und/oder Verbindungsschlüssels ferner auf der Telematikeinheitidentifizierungsinformation basiert;
- Prüfen zumindest eines Teils der ersten Verbindungsaufbaunachricht zumindest teilweise basierend auf dem Authentifizierungs- und/oder Verbindungsschlüssel.

Das Verfahren gemäß dem zweiten Aspekt der Erfindung wird durch die Telematikeinheit ausgeführt.

Gemäß dem zweiten Aspekt der Erfindung wird ferner eine Telematikeinheit für ein Nutzfahrzeug offenbart, wobei die Telematikeinheit eingerichtet ist zur Ausführung und/oder Steuerung des Verfahrens gemäß dem zweiten Aspekt der Erfindung oder jeweilige Mittel zur Ausführung und/oder Steuerung der Schritte des Verfahrens gemäß dem zweiten Aspekt der Erfindung umfasst. Dabei können entweder alle Schritte des Verfahrens von den Mitteln gesteuert werden, oder alle Schritte des Verfahrens von den Mitteln ausgeführt werden, oder ein oder mehrere Schritte von den Mitteln gesteuert und ein oder mehrere Schritte von den Mitteln ausgeführt werden. Verschiedene Schritte können optional von verschiedenen Mitteln ausgeführt oder gesteuert werden. Die Mittel können Hardware- und/oder Software-Komponenten umfassen.

Die Mittel können beispielsweise mindestens einen Speicher mit Programmanweisungen eines Computerprogramms (z.B. des Computerprogramms gemäß dem ersten Aspekt der Erfindung) und mindestens einen Prozessor ausgebildet zum Ausführen von Programmanweisungen aus dem mindestens einen Speicher umfassen. Dementsprechend soll gemäß dem zweiten Aspekt der Erfindung auch eine Telematikeinheit für ein Nutzfahrzeug als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Telematikeinheit zu veranlassen, das Verfahren gemäß dem zweiten Aspekt der Erfindung auszuführen und/oder zu steuern.

Alternativ oder zusätzlich können die Mittel ferner eine oder mehrere drahtlose Netzwerkschnittstellen (z.B. einen oder mehrere drahtlose Netzwerkadapter) und/oder einen oder mehrere Sensoren zum Erfassen von Zustandsinformationen umfassen. Es versteht sich, dass die Telematikeinheit auch andere nicht aufgeführte Mittel umfassen kann.

Die Telematikeinheit für ein Nutzfahrzeug gemäß dem zweiten Aspekt der Erfindung entspricht beispielsweise der Telematikeinheit in dem Verfahren gemäß dem zweiten Aspekt der Erfindung.

Gemäß dem zweiten Aspekt der Erfindung wird ferner ein Computerprogramm offenbart, wobei das Computerprogramm Programmanweisungen umfasst, die dazu ausgebildet sind, bei Ausführung durch mindestens einen Prozessor eine Vorrichtung (z.B. eine Telematikeinheit für ein Nutzfahrzeug) zu veranlassen, das Verfahren gemäß dem zweiten Aspekt auszuführen.

Das Computerprogramm gemäß dem zweiten Aspekt der Erfindung ist beispielsweise auf einem computerlesbaren Speichermedium enthalten und/oder gespeichert. Unter einem computerlesbaren Speichermedium soll, wie oben offenbart, beispielsweise ein physisches und/oder berührbares Speichermedium verstanden werden.

Im Folgenden werden die Eigenschaften der Verfahren gemäß dem ersten Aspekt und dem zweiten Aspekt der Erfindung, dem mobilen Gerät gemäß dem ersten Aspekt der Erfindung, der Telematikeinheit für ein Nutzfahrzeug gemäß dem zweiten Aspekt der Erfindung und dem Computerprogramms gemäß dem ersten Aspekt und dem zweiten Aspekt der Erfindung - teilweise beispielhaft - beschrieben.

Der erste Aspekt der Erfindung betrifft den Aufbau der Verbindung zwischen dem mobilen Gerät und der Telematikeinheit eines Nutzfahrzeugs auf Seiten des mobilen Gerät; und der zweite Aspekt der Erfindung betrifft den Aufbau der Verbindung zwischen dem mobilen Gerät und der Telematikeinheit eines Nutzfahrzeugs auf Seiten der Telematikeinheit. Dementsprechend soll die Offenbarung von für den ersten Aspekt der Erfindung offenbarten Merkmalen - soweit sinnvoll - auch als Offenbarung korrespondierender Merkmale für den zweiten Aspekt der Erfindung gelten.

Die Verbindung zwischen dem mobilen Gerät und der Telematikeinheit eines Nutzfahrzeugs ist vorzugsweise eine direkte Verbindung über das erste drahtlose Kommunikationsnetzwerk. Das erste drahtlose Kommunikationsnetzwerk ist beispielsweise ein drahtloses lokales Kommunikationsnetzwerk wie ein WLAN-Kommunikationsnetzwerk (Wireless Local Area Network) oder ein Zigbee-Kommunikationsnetzwerk oder ein Bluetooth-Kommunikationsnetzwerk. Die Bluetooth-Spezifikationen sind derzeit im Internet unter www.bluetooth.org erhältlich. WLAN ist zum Beispiel in den Standards der IEEE-802.11-Familie spezifiziert. Die Zigbee-Spezifikationen sind derzeit im Internet unter www.zigbee.org erhältlich.

Das zweite drahtlose Kommunikationsnetzwerk ist beispielsweise ein von dem ersten drahtlosen Kommunikationsnetzwerk verschiedenes Kommunikationsnetzwerk. Beispielsweise ist das zweite drahtlose Kommunikationsnetzwerk ein Kommunikationsnetzwerk mit einer größeren Reichweite und/oder Abdeckung als das erste drahtlose Kommunikationsnetzwerk. Zum Beispiel ist das zweite drahtlose Kommunikationsnetzwerk ein überregionales Funknetzwerk wie ein Mobilfunknetzwerk, zum Beispiel ein GSM-Kommunikationsnetzwerk (Global System for Mobile Communications) und/oder ein UMTS-Kommunikationsnetzwerk (Universal Mobile Telecommunications System) und/oder ein LTE-Kommunikationsnetzwerk (Long Term Evolution). Die GSM-, UMTS- und LTE-Spezifikationen werden von dem 3rd Generation Partnership Project (3GPP) gepflegt und entwickelt und sind derzeit im Internet unter anderem unter www.3gpp.com erhältlich.

Ein mobiles Gerät ist beispielsweise ein tragbares Benutzergerät wie ein Mobiltelefon (z.B. ein Smartphone), eine Smartwatch, ein persönlicher digitaler Assistent, ein tragbares Navigationsgerät, ein Tabletcomputer und/oder ein Laptopcomputer. Es kann jedoch auch Teil eines Nutzfahrzeugs wie beispielsweise eines Nutzfahrzeugbordcomputers oder eines Nutzfahrzeugnavigationssystems sein.

Ein Nutzfahrzeug ist zum Beispiel ein Lastkraftwagen, ein Anhänger oder ein Sattelauflieger. Nutzfahrzeuge sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen. So sind beispielsweise Kofferaufbauten mit festen Seitenwänden und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet. Neben Kofferaufbauten sind zudem sogenannte Planenaufbauten bekannt, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Plane entlang der Seitenwand verschoben werden kann, spricht man auch von sogenannten Curtainsidern.

Eine Telematikeinheit eines Nutzfahrzeugs ist beispielsweise eingerichtet zum Erfassen von Zustandsinformationen des Nutzfahrzeugs. Beispiele solcher Zustandsinformationen sind: Tankfüllstandinformationen, Reifendruckinformationen, Feuchtigkeitsinformationen, Temperaturinformationen, Türöffnungs- und - schließinformationen und/oder Positionsinformationen. Zum Beispiel kann die Telematikeinheit diese Zustandsinformationen durch entsprechende Sensoren erfassen und/oder von entsprechenden Sensoren empfangen. Ferner ist die Telematikeinheit eines Nutzfahrzeugs beispielsweise eingerichtet zum Senden der erfassten Zustandsinformationen an einen Server eines Telematiksystems und/oder eines Telematikdienstes. Der Server stellt beispielsweise eine Benutzeroberfläche zum Zugriff auf die Zustandsinformationen über das Internet bereit.

Über die Verbindung zwischen der Telematikeinheit und dem mobilen Gerät über das erste drahtlose Kommunikationsnetzwerk kann beispielsweise ebenfalls ein Zugriff auf durch die Telematikeinheit erfasste Zustandsinformationen erfolgen oder diese abgerufen werden. Dies ist beispielsweise vorteilhaft, um für mobile Geräte in der Reichweite der Telematikeinheit eine alternative und/oder direkte Möglichkeit für einen Zugriff auf die erfassten Zustandsinformationen bereitzustellen.

Gemäß dem zweiten Aspekt der Erfindung wird die erste Authentifizierungsinformation von einem entfernten Server empfangen. Der entfernte Server ist beispielsweise ein Server eines Telematiksystems und/oder eines Telematikdienstes. Zum Beispiel kann ein Benutzer über eine Benutzeroberfläche des Servers die Telematikeinheit konfigurieren und die erste Authentifizierungsinformation und/oder weitere Bedingungen (z.B. einen bestimmten geographischen Bereich und/oder einen bestimmten Zeitbereich und/oder eine oder mehrere Adressen) zum Aufbauen einer Verbindung mit der Telematikeinheit vorgeben.

Das Erhalten der ersten Authentifizierungsinformation gemäß dem ersten Aspekt der Erfindung erfolgt beispielsweise separat von dem Erfassen der Telematikeinheitidentifizierungsinformation gemäß dem ersten Aspekt der Erfindung. Zum Beispiel erfolgt das Erhalten der ersten Authentifizierungsinformation über einen anderen Kanal und/oder zu einem anderen Zeitpunkt als das Erfassen der Telematikeinheitidentifizierungsinformation. Dies ist beispielsweise vorteilhaft, um die Sicherheit beim Aufbau der Verbindung zu erhöhen und zu vermeiden, dass ein Angreifer gleichzeitig an beide Informationen gelangen kann.

Die Telematikeinheit ist beispielsweise basierend auf der Telematikeinheitidentifizierungsinformation mittelbar oder unmittelbar identifizierbar. Zum Beispiel repräsentiert die Telematikeinheitidentifizierungsinformation eine Kennung eines drahtlosen Zugangspunkts der Telematikeinheit. Ein Beispiel für eine solche Kennung ist beispielsweise eine SSID (Service Set Identification) des drahtlosen Zugangspunkts der Telematikeinheit, eine BSSID (Basic Service Set Identification) des drahtlosen Zugangspunkts der Telematikeinheit. Alternativ oder zusätzlich kann die Telematikeinheitidentifizierungsinformation beispielsweise eine Adresse (z.B. eine MAC-Adresse (Media-Access-Control) und/oder eine IP-Adresse (Internet Protocol)) oder ein Name (z.B. ein Netzwerkname) der Telematikeinheit sein. Dementsprechend soll unter dem Identifizieren der Telematikeinheit gemäß dem ersten Aspekt der Erfindung beispielsweise verstanden werden, dass eine (verfügbare) Telematikeinheit mit einem Zugangspunkt mit einer solchen Kennung oder eine (verfügbare) Telematikeinheit mit einer solchen Adresse oder einem solchen Namen identifiziert und/oder ausgewählt wird. Dies ist beispielsweise vorteilhaft, wenn mehrere Telematikeinheiten an der Position des mobilen Geräts verfügbar (z.B. in Sende- und/oder Empfangsreichweite) sind.

Die erste Authentifizierungsinformation repräsentiert zum Beispiel ein Passwort oder eine Passphrase oder ein Teil eines Passworts oder einer Passphrase. Unter einem Passwort oder einer Passphrase kann eine Zeichenfolge, eine Buchstabenfolge und/oder eine Ziffernfolge verstanden werden.

Beispielsweise ist die erste Authentifizierungsinformation ein Passwort oder eine Passphrase oder ein Teil eines Passworts oder einer Passphrase gemäß dem WPA- oder dem WPA2-Standard. WPA steht für Wi-Fi Protected Access. Die WPA- und WPA2-Standards spezifizieren durch die Wi-Fi Alliance (www.wi-fi.org) entwickelte Sicherheitsprotokolle für WLAN-Netzwerke und basieren auf dem IEEE 802.11i-Standard.

Das Bestimmen des Authentifizierungs- und/oder Verbindungsschlüssel gemäß dem ersten Aspekt der Erfindung erfolgt zumindest teilweise basierend auf der Authentifizierungsinformation.

Zum Beispiel wird der Authentifizierungs- und/oder Verbindungsschlüssel derart bestimmt, dass er die erste Authentifizierungsinformation enthält oder der ersten Authentifizierungsinformation entspricht.

Alternativ wird der Authentifizierungs- und/oder Verbindungsschlüssel beispielsweise gemäß einem vorgegebenen kryptographischen Algorithmus zumindest teilweise basierend auf der Authentifizierungsinformation bestimmt. Ein Beispiel für einen solchen kryptographischen Algorithmus ist beispielsweise ein PBKDF-Algorithmus (Password-Based Key Derivation Function). In der RFC 2898-Spezifikation der IETF (www.ietf.org) sind beispielsweise die Algorithmen PBKDF1 und PBKDF2 veröffentlicht. Dies ist beispielsweise vorteilhaft, um aus einem beliebigen Passwort oder einer beliebigen Passphrase einen Authentifizierungs- und/oder Verbindungsschlüssel mit einer vorgegebenen Länge zu erhalten.

Unter dem Authentifizierungs- und/oder Verbindungsschlüssel soll beispielsweise ein Schlüssel verstanden werden, der zur gegenseitigen Authentifizierung beim Aufbau der Verbindung zwischen dem mobilen Gerät und der Telematikeinheit eines Nutzfahrzeugs über das erste drahtlose Kommunikationsnetzwerk dient. Alternativ oder zusätzlich soll unter dem Authentifizierungs- und/oder Verbindungsschlüssel beispielsweise ein Schlüssel verstanden werden, der zur Verschlüsselung einer Kommunikation über diese Verbindung dient.

Zum Beispiel ist der Authentifizierungs- und/oder Verbindungsschlüssel ein Pre-Shared Key gemäß dem WPA- oder dem WPA2-Standard oder ein Pairwise Transient Key gemäß dem WPA- oder WPA2-Standard.

Die erste Verbindungsaufbaunachricht ist beispielsweise an die gemäß dem ersten Aspekt der Erfindung identifizierte Telematikeinheit eines Nutzfahrzeugs adressiert und/oder wird an die identifizierte Telematikeinheit eines Nutzfahrzeugs gesendet.

Zum Beispiel dient die erste Verbindungsaufbaunachricht zum Aufbauen der Verbindung zwischen dem mobilen Gerät und der Telematikeinheit eines Nutzfahrzeugs. Unter der ersten Verbindungsaufbaunachricht soll beispielsweise eine im Rahmen eines Aufbaus der Verbindung des mobilen Geräts mit der Telematikeinheit eines Nutzfahrzeugs über das erste drahtlose Kommunikationsnetzwerk gesendete Nachricht verstanden werden. Zum Beispiel ist die erste Verbindungsaufbaunachricht eine im Rahmen eines Handshakes gemäß dem WPA- oder WPA2-Standard zwischen dem mobilen Gerät und der Telematikeinheit eines Nutzfahrzeugs gesendete Nachricht.

Das Prüfen zumindest eines Teils der ersten Verbindungsaufbaunachricht gemäß dem zweiten Aspekt der Erfindung umfasst beispielsweise das Prüfen, ob die erste Verbindungsaufbaunachricht zumindest teilweise basierend auf dem Authentifizierungs- und/oder Verbindungsschlüssel erzeugt wurde. Dadurch kann beispielsweise sichergestellt werden, dass der Authentifizierungs- und/oder Verbindungsschlüssel des mobilen Geräts und der Telematikeinheit eines Nutzfahrzeugs zueinander korrespondieren. Es kann beispielsweise vorgesehen sein, dass die Verbindung nur in diesem Fall als sicher angesehen werden soll und somit hergestellt werden darf.

Das Ergebnis des Prüfens ist beispielsweise positiv, wenn das Prüfen ergibt, dass die erste Verbindungsaufbaunachricht zumindest teilweise basierend auf dem Authentifizierungs- und/oder Verbindungsschlüssel erzeugt wurde. Andernfalls ist das Ergebnis beispielsweise negativ.

Für einen erfolgreichen Aufbau der Verbindung gemäß dem ersten und dem zweiten Aspekt der Erfindung müssen somit mehrere Bedingungen erfüllt sein. So muss das mobile Gerät zum einen die Telematikeinheitidentifizierungsinformation zum Identifizieren der Telematikeinheit erfassen und zum anderen müssen die Authentifizierungs- und/oder Verbindungsschlüssel des mobilen Geräts und der Telematikeinheit zu einander korrespondieren. Der erste und der zweite Aspekt der Erfindung ermöglichen somit, einen sicheren Aufbau einer Verbindung (z.B. einer direkten Verbindung) zwischen einem mobilen Gerät und der Telematikeinheit eines Nutzfahrzeugs.

Es versteht sich, dass zusätzliche weitere Bedingungen gemäß dem zweiten Aspekt der Erfindung geprüft werden können. Es kann vorgesehen sein, dass diese Bedingungen zumindest (z.B. nur) beim ersten Aufbau einer Verbindung der Telematikeinheit des Nutzfahrzeugs mit dem mobilen Gerät geprüft werden, um die Sicherheit zu erhöhen. So kann das Prüfen gemäß dem zweiten Aspekt der Erfindung zumindest beim erstmaligen Aufbauen der Verbindung beispielsweise ferner zumindest teilweise in Abhängigkeit einer Position der Telematikeinheit (z.B. der zuletzt von einem Positionssensor der Telematikeinheit erfassten Position) und/oder einem Zeitpunkt (z.B. der aktuellen Uhrzeit und/oder dem aktuellen Datum) und/oder einer Adresse (z.B. einer MAC-Adresse) des mobilen Geräts erfolgen. Zum Beispiel kann vorgegeben sein, dass das Ergebnis des Prüfens nur in einem bestimmten geographischen Bereich (z.B. auf einem Betriebshof eines Spediteurs) und/oder in einem bestimmten Zeitraum (z.B. zu Betriebsbeginn eines Spediteurs) und/oder für mobile Geräte mit vorgegebenen MAC-Adressen positiv sein darf. Andernfalls ist das Ergebnis beispielsweise negativ.

Im Falle einer positiven Prüfung wird der Aufbau der Verbindung beispielsweise fortgesetzt und/oder abgeschlossen; und im Falle einer negativen Prüfung wird der Aufbau der Verbindung beispielsweise abgebrochen.

In beispielhaften Ausführungsformen des ersten Aspekts der Erfindung umfasst das Erzeugen der ersten Verbindungsaufbaunachricht das Bestimmen zumindest eines Teils der ersten Verbindungsaufbaunachricht gemäß einem vorgegebenen kryptographischen Algorithmus, wobei der Authentifizierungs- und/oder Verbindungsschlüssel als Schlüssel des kryptographischen Algorithmus verwendet wird.

Ein Beispiel für einen solchen kryptographischen Algorithmus ist eine Verschlüsselungsfunktion, die auf die erste Verbindungsaufbaunachricht oder einen Teil der ersten Verbindungsaufbaunachricht angewendet wird, so dass anschließend eine entsprechend verschlüsselte erste Verbindungsaufbaunachricht an die Telematikeinheit eines Nutzfahrzeugs gesendet wird.

Ein anderes Beispiel für einen solchen kryptographischen Algorithmus ist eine kryptographische Hashfunktionen, die auf die erste Verbindungsaufbaunachricht oder einen Teil der ersten Verbindungsaufbaunachricht angewendet wird und deren Ergebnis der ersten Verbindungsaufbaunachricht beispielsweise als MIC (Message Integrity Code) oder MAC (Message Authentication Code) hinzugefügt wird. In diesem Beispiel enthält die an die Telematikeinheit eines Nutzfahrzeugs gesendete erste Verbindungsaufbaunachricht den MIC oder MAC.

In korrespondierenden beispielhaften Ausführungsformen des zweiten Aspekts der Erfindung erfolgt das Prüfen gemäß einem vorgegebenen kryptographischen Algorithmus, wobei der Authentifizierungs- und/oder Verbindungsschlüssel als Schlüssel des kryptographischen Algorithmus verwendet wird.

Zum Beispiel ist der kryptographische Algorithmus eine Entschlüsselungsfunktion, die auf die empfange erste Verbindungsaufbaunachricht oder einen Teil der ersten Verbindungsaufbaunachricht angewendet wird. Wenn die Entschlüsselung erfolgreich ist, ist das Ergebnis der Prüfung beispielsweise positiv, andernfalls negativ.

Ein anderes Beispiel für einen solchen kryptographischen Algorithmus ist eine kryptographische Hashfunktionen, die auf die erste Verbindungsaufbaunachricht oder einen Teil der ersten Verbindungsaufbaunachricht angewendet wird. Als Ergebnis der kryptographischen Hashfunktionen wird beispielsweise ein MIC (Message Integrity Code) oder MAC (Message Authentication Code) erhalten, der mit einem in der empfangenen ersten Verbindungsaufbaunachricht enthaltenen MIC oder MAC verglichen werden kann. Bei einer Übereinstimmung ist das Ergebnis der Prüfung beispielsweise positiv, andernfalls negativ.

Solche Ausführungsformen, die keine Kommunikation des Authentifizierungs- und Verbindungsschlüssels zwischen der Telematikeinheit und dem mobilen Gerät für den Aufbau der Verbindung erfordern, haben den Vorteil, dass ein Angreifer den Authentifizierungs- und Verbindungsschlüssels nicht durch das Abfangen einer solchen Kommunikation erbeuten kann.

In beispielhaften Ausführungsformen des ersten Aspekts der Erfindung enthält die erste Verbindungsaufbaunachricht den Authentifizierungs- und/oder Verbindungsschlüssel. In korrespondierenden beispielhaften Ausführungsformen des zweiten Aspekts der Erfindung erfolgt das Prüfen beispielsweise durch einen Vergleich des in der empfangen ersten Verbindungsaufbaunachricht enthaltenen Authentifizierungs- und/oder Verbindungsschlüssels mit dem bestimmten Authentifizierungs- und/oder Verbindungsschlüssel.

In beispielhaften Ausführungsformen des ersten Aspekts wird die erste Authentifizierungsinformation durch Empfangen der Authentifizierungsinformation an dem mobilen Gerät über ein zweites drahtloses Kommunikationsnetzwerk von einem entfernten Server erhalten. Wie oben offenbart, ist das zweite drahtlose Kommunikationsnetzwerk beispielsweise ein von dem ersten drahtlosen Kommunikationsnetzwerk verschiedenes Kommunikationsnetzwerk. Der entfernte Server ist beispielsweise ein Server eines Telematiksystems und/oder eines Telematikdienstes. Wie oben offenbart, kann ein Benutzer über eine Benutzeroberfläche des Servers beispielsweise die erste Authentifizierungsinformation vorgeben. Gleichzeitig kann der Benutzer zum Beispiel vorgegeben, welche mobilen Gerät und/oder welche Benutzer die erste Authentifizierungsinformation zum Aufbau einer Verbindung mit der Telematikeinheit des Nutzfahrzeugs erhalten sollen.

Dies ist beispielsweise vorteilhaft, um dem mobilen Gerät die erste Authentifizierungsinformation automatisch zur Verfügung stellen zu können und beispielsweise eine zentrale Zugriffsteuerung zu ermöglichen.

In beispielhaften Ausführungsformen des ersten Aspekts wird die erste Authentifizierungsinformation durch Erfassen einer Benutzereingabe an dem mobilen Gerät erhalten. Dies ist beispielsweise vorteilhaft, wenn das mobile Gerät über keine drahtlose Netzwerkschnittstelle zur Kommunikation mit einem Server (z.B. einem Server eines Telematiksystems und/oder eines Telematikdienstes) verfügt.

In beispielhaften Ausführungsformen des ersten Aspekts und gemäß dem zweiten Aspekt der Erfindung wird die Telematikeinheitidentifizierungsinformation durch das Nutzfahrzeug oder eine Komponente des Nutzfahrzeugs bereitgestellt.

Zum Beispiel kann die Telematikeinheitidentifizierungsinformation beispielsweise als graphische Information durch das Nutzfahrzeug oder eine Komponente bereitgestellt werden (z.B. als QR-Code, als Barcode und/oder als Zeichenfolge). Die Telematikeinheitidentifizierungsinformation kann beispielsweise durch ein an dem Nutzfahrzeug angebrachtes Nummernschild oder einen Aufdruck und/oder Aufkleber an einem Aufbau des Nutzfahrzeugs bereitgestellt werden. Ein Aufdruck und/oder Aufkleber kann sich beispielsweise an einer Außenseite eines Aufbaus des Nutzfahrzeugs befinden.

Gemäß dem ersten Aspekt der Erfindung wird die Telematikeinheitidentifizierungsinformation durch einen optischen Sensor erfasst.

Dies ist beispielsweise vorteilhaft, um die Telematikeinheitidentifizierungsinformation dem mobilen Gerät, wenn es sich in Sichtweite des Nutzfahrzeugs befindet, über einen optischen Kanal bereitzustellen. Auch hierdurch kann sichergestellt werden, dass nur mobile Geräte in unmittelbarer Umgebung des Nutzfahrzeugs (z.B. mobile Gerät von Benutzern mit Zugang zu dem Nutzfahrzeug) die Telematikeinheitidentifizierungsinformation erfassen können. Um die Telematikeinheitidentifizierungsinformation einer Telematikeinheit eines bestimmten Nutzfahrzeugs zu erfassen, reicht es in diesem Fall aus, dass der Benutzer eine Sichtverbindung zwischen dem mobilen Gerät und diesem Nutzfahrzeug herstellt. Dies ist für den Benutzer ebenfalls einfach und komfortabel und erhöht, wie oben offenbart, die Sicherheit.

In beispielhaften Ausführungsformen des ersten Aspekts der Erfindung basiert das Bestimmen des Authentifizierungs- und/oder Verbindungsschlüssels ferner auf einer in einem Speicher des mobilen Geräts gespeicherten zweiten Authentifizierungsinformation und/oder der erfassten Telematikeinheitidentifizierungsinformation. In korrespondierenden beispielhaften Ausführungsformen des zweiten Aspekts der Erfindung basiert das Bestimmen des Authentifizierungs- und/oder Verbindungsschlüssels ferner auf einer in einem Speicher der Telematikeinheit gespeicherten zweiten Authentifizierungsinformation und/oder der Telematikeinheitidentifizierungsinformation.

Zum Beispiel kann der Authentifizierungs- und/oder Verbindungsschlüssel zumindest teilweise basierend auf einer Kombination der zweiten Authentifizierungsinformation und/oder der Telematikeinheitidentifizierungsinformation bestimmt werden. Dies ist beispielsweise vorteilhaft, wenn ein für einen Benutzer einfach zu merkendes Passwort oder eine für einen Benutzer einfach zu merkende Passphrase als erste Authentifizierungsinformation verwendet wird. Denn durch die Kombination mit der zweiten Authentifizierungsinformation und/oder der Telematikeinheitidentifizierungsinformation wird die Gesamtkomplexität erhöht und somit beispielsweise Wörterbuchangriffe erschwert. Zu diesem Zweck können alternativ oder zusätzlich auch temporäre Informationen (z.B. Pseudozufallszahlen, Zufallszahlen, rollierende Codes, Zählerinformationen, Zeitstempel, usw.) mit der ersten Authentifizierungsinformation kombiniert werden.

In beispielhaften Ausführungsformen des zweiten Aspekts der Erfindung umfasst das Verfahren ferner Folgendes:
- Erzeugen einer zweiten Verbindungsaufbaunachricht zumindest teilweise basierend auf dem Authentifizierungs- und/oder Verbindungsschlüssel;
- Senden der zweiten Verbindungsaufbaunachricht an das mobile Gerät über das erste drahtlose Kommunikationsnetzwerk.

Das Erzeugen und Senden der zweiten Verbindungsaufbaunachricht soll beispielsweise entsprechend dem oben offenbarten Erzeugen und Senden der ersten Verbindungsaufbaunachricht erfolgen. Zum Beispiel sind die erste Verbindungsaufbaunachricht und die zweite Verbindungsaufbaunachricht im Rahmen eines Handshakes gemäß dem WPA- oder WPA2-Standard zwischen dem mobilen Gerät und der Telematikeinheit eines Nutzfahrzeugs gesendete Nachrichten.

In korrespondierenden beispielhaften Ausführungsformen des ersten Aspekts der Erfindung umfasst das Verfahren ferner Folgendes:
- Empfangen einer zweiten Verbindungsaufbaunachricht zum Aufbauen der Verbindung von der Telematikeinheit über das erste drahtlose Kommunikationsnetzwerk;
- Prüfen zumindest eines Teils der zweiten Verbindungsaufbaunachricht zumindest teilweise basierend auf dem Authentifizierungs- und/oder Verbindungsschlüssel.

Das Prüfen der zweiten Verbindungsaufbaunachricht soll beispielsweise entsprechend dem oben offenbarten Prüfen der ersten Verbindungsaufbaunachricht erfolgen. Im Falle einer positiven Prüfung wird der Aufbau der Verbindung beispielsweise fortgesetzt und/oder abgeschlossen; und im Falle einer negativen Prüfung wird der Aufbau der Verbindung beispielsweise abgebrochen.

In beispielhaften Ausführungsformen des zweiten Aspekts der Erfindung umfasst das Verfahren ferner Folgendes:
- Bereitstellen einer Telematikeinheitidentifizierungsinformation zum Identifizieren der Telematikeinheit durch das Nutzfahrzeug.

In beispielhaften Ausführungsformen des ersten Aspekts der Erfindung umfasst das Verfahren ferner Folgendes:
- Herstellen der Verbindung des mobilen Geräts mit der Telematikeinheit eines Nutzfahrzeugs über das erste drahtlose Kommunikationsnetzwerk.

Zum Beispiel erfolgt das Herstellen der Verbindung gemäß dem ersten Aspekt nur dann, wenn das Ergebnis des oben offenbarten Prüfens gemäß dem ersten Aspekt der Erfindung positiv ist. Andernfalls wird das Aufbauen der Verbindung mit der Telematikeinheit beispielsweise abgebrochen (z.B. verweigert).

Es versteht sich, dass die Verbindung nach einem erstmaligen erfolgreichen Aufbau der Verbindung in einigen beispielhaften Ausführungsformen des ersten Aspekts der Erfindung automatisch erneut aufgebaut werden kann, wenn es zu Verbindungsunterbrechungen kommt. Dabei kann auf das Prüfen gemäß dem ersten Aspekt zumindest teilweise oder vollständig verzichtet werden.

In korrespondierenden beispielhaften Ausführungsformen des zweiten Aspekts der Erfindung umfasst das Verfahren ferner Folgendes:
- Herstellen der Verbindung der Telematikeinheit des Nutzfahrzeugs mit dem mobilen Gerät über das erste drahtlose Kommunikationsnetzwerk.

Zum Beispiel erfolgt das Herstellen der Verbindung gemäß dem zweiten Aspekt nur dann, wenn das Ergebnis des oben offenbarten Prüfens gemäß dem zweiten Aspekt der Erfindung positiv ist. Andernfalls wird das Aufbauen der Verbindung mit dem mobilen Gerät beispielsweise abgebrochen (z.B. verweigert).

Auch hier versteht es sich, dass die Verbindung nach einem erstmaligen erfolgreichen Aufbau der Verbindung in einigen beispielhaften Ausführungsformen des zweiten Aspekts der Erfindung automatisch erneut aufgebaut werden kann, wenn es zu Verbindungsunterbrechungen kommt. Dabei kann auf das Prüfen gemäß dem zweiten Aspekt zumindest teilweise oder vollständig verzichtet werden.

In beispielhaften Ausführungsformen des zweiten Aspekts der Erfindung umfasst das Verfahren ferner Folgendes:
- Bereitstellen eines drahtlosen Zugangspunkts.

Der drahtlose Zugangspunkt ist beispielsweise ein drahtloser Zugangspunkt des ersten Kommunikationsnetzwerks (z.B. ein WLAN-, Zigbee- und/oder Bluetooth-Zugangspunkt). Der drahtlose Zugangspunkt wird zum Beispiel durch eine drahtlose Netzwerkschnittstelle der Telematikeinheit eines Nutzfahrzeugs bereitgestellt.

Gemäß einem dritten Aspekt der Erfindung wird ein Verfahren offenbart, wobei das Verfahren die Schritte des Verfahrens gemäß dem ersten Aspekt der Erfindung und die Schritte des Verfahrens gemäß dem zweiten Aspekt der Erfindung umfasst.

Gemäß dem dritten Aspekt der Erfindung wird ferner ein System offenbart, wobei das System ein mobiles Gerät gemäß dem ersten Aspekt der Erfindung und eine Telematikeinheit für ein Nutzfahrzeug gemäß dem zweiten Aspekt der Erfindung umfasst. Zum Beispiel wird das Verfahren gemäß dem dritten Aspekt der Erfindung durch dieses System ganz oder teilweise ausgeführt.

Es versteht sich, dass das System gemäß dem dritten Aspekt der Erfindung ferner einen Server (z.B. den oben offenbarten Server eines Telematiksystems und/oder eines Telematikdienstes) und/oder ein Nutzfahrzeug mit der Telematikeinheit umfassen kann.

Weitere vorteilhafte beispielhafte Ausführungsformen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung verstanden werden.

Es zeigen:
- Fig. 1: eine schematische Darstellung einer Ausführungsform eines mobilen Geräts gemäß dem ersten Aspekt der Erfindung;
- Fig. 2: eine schematische Darstellung einer Ausführungsform einer Telematikeinheit für ein Nutzfahrzeug gemäß dem zweiten Aspekt der Erfindung;
- Fig. 3: eine schematische Darstellung einer beispielhaften Ausführungsform eines Systems gemäß dem dritten Aspekt der Erfindung;
- Fig. 4: ein Flussdiagramm eines Ausführungsbeispiels eines Verfahrens gemäß dem ersten Aspekt der Erfindung; und
- Fig. 5: ein Flussdiagramm eines Ausführungsbeispiels eines Verfahrens gemäß dem zweiten Aspekt der Erfindung.

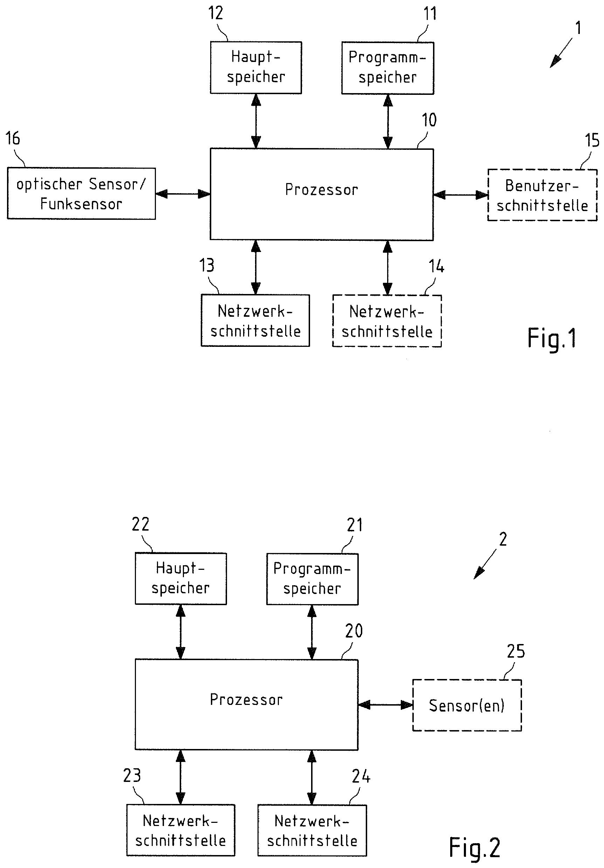

Fig. 1 ist eine schematische Darstellung einer beispielhaften Ausführungsform eines mobilen Geräts 1 gemäß dem ersten Aspekt der Erfindung.

Das mobile Gerät umfasst beispielhaft einen Prozessor 10 und verbunden mit dem Prozessor 10 einen ersten Speicher als Programm- und Datenspeicher 11, einen zweiten Speicher als Hauptspeicher 12 sowie eine erste drahtlose Netzwerkschnittstelle 13. Ferner kann das mobile Gerät 1 optional eine zweite drahtlose Netzwerkschnittstelle 14, eine Benutzerschnittstelle 15 und/oder einen Sensor 16 fassen.

Unter einem Prozessor soll beispielsweise ein Mikroprozessor, eine Mikrokontrolleinheit, ein Mikrocontroller, ein digitaler Signalprozessor (DSP), eine Anwendungsspezifische Integrierte Schaltung (ASIC) oder ein Field Programmable Gate Array (FPGA) verstanden werden. Es versteht sich, dass das mobile Gerät 1 auch mehrere Prozessoren 10 umfassen kann.

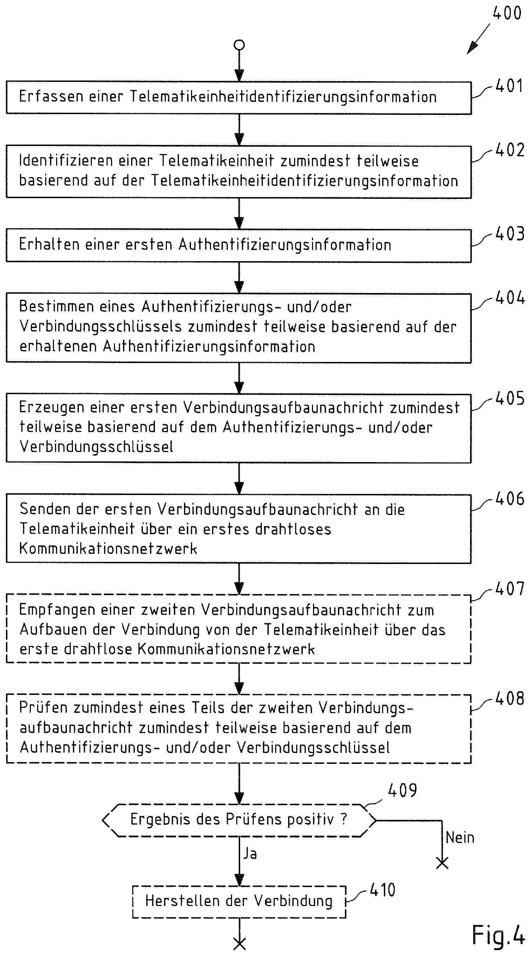

Prozessor 10 führt Programmanweisungen aus, die in Programmspeicher 11 gespeichert sind, und speichert beispielsweise Zwischenergebnisse oder ähnliches in Hauptspeicher 12. Der Programmspeicher 11 enthält beispielsweise Programmanweisungen eines Computerprogramms gemäß dem ersten Aspekt der Erfindung, das Programmanweisungen umfasst, die den Prozessor 10 veranlassen, das Verfahren gemäß dem ersten Aspekt der Erfindung (z.B. das Verfahren gemäß dem in Fig. 4 dargestellten Flussdiagram 400) auszuführen und/oder zu steuern, wenn der Prozessor 10 diese in Programmspeicher 11 gespeicherten Programmanweisungen ausführt.

Programmspeicher 11 enthält ferner beispielsweise das Betriebssystem des mobilen Geräts 1, das beim Starten des Geräts 1 zumindest teilweise in Hauptspeicher 12 geladen und vom Prozessor 10 ausgeführt wird. Insbesondere wird beim Starten des mobilen Geräts 1 zumindest ein Teil des Kerns des Betriebssystems in den Hauptspeicher 12 geladen und von Prozessor 10 ausgeführt.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung des mobilen Geräts zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Hauptspeicher 12 und Programmspeicher 11 können auch als ein Speicher ausgebildet sein. Alternativ können Hauptspeicher 12 und/oder Programmspeicher 11 jeweils durch mehrere Speicher gebildet werden. Ferner können Hauptspeicher 12 und/oder Programmspeicher 11 auch Teil des Prozessors 10 sein.

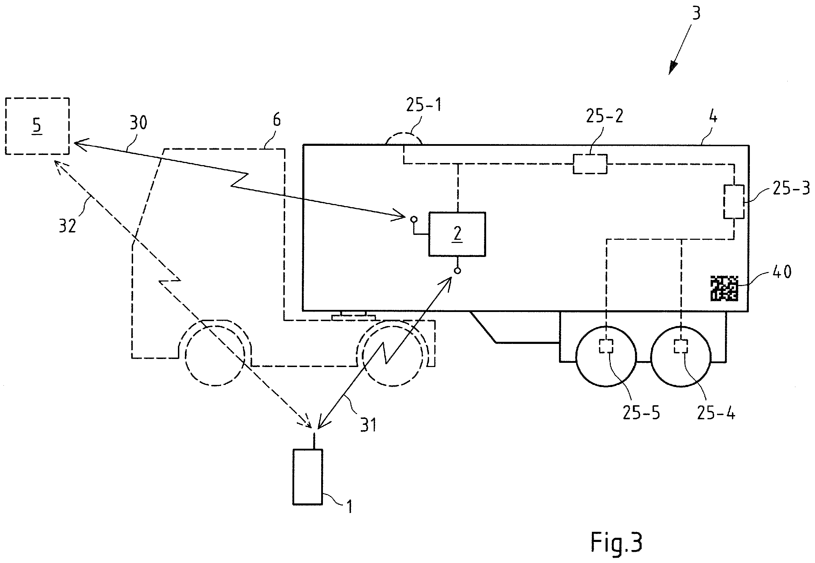

Prozessor 10 steuert die erste drahtlose Netzwerkschnittstelle 13, welche beispielsweise als Bluetooth-, WLAN- oder Zigbee-Schnittstelle ausgebildet ist. Sie ist beispielsweise eingerichtet zur Kommunikation mit einer Telematikeinheit eines Nutzfahrzeugs (z.B. der in Fig. 3 dargestellten Telematikeinheit 2) über ein erstes drahtloses Kommunikationsnetzwerk (z.B. ein Bluetooth-, WLAN- oder Zigbee-Netzwerk).

Ferner steuert Prozessor 10 die zweite drahtlose Netzwerkschnittstelle 14, welche beispielsweise als GSM-, UMTS- und/oder LTE-Schnittstelle ausgebildet ist. Sie ist beispielsweise eingerichtet zur Kommunikation mit einem Server (z.B. dem in Fig. 3 dargestellten Server 5 eines Telematikdienstes) über ein zweites drahtloses Kommunikationsnetzwerk (z.B. eine GSM-, UMTS- und/oder LTE-Netzwerk).

Eine drahtlose Netzwerkschnittstelle kann beispielsweise Informationen (über eine Verbindung in einem drahtlosen Kommunikationsnetzwerk) empfangen und an den Prozessor weiterleiten und/oder Informationen von dem Prozessor empfangen und (über eine Verbindung in einem drahtlosen Kommunikationsnetzwerk) senden. Ein Beispiel für eine drahtlose Netzwerkschnittstelle ist ein drahtloser Kommunikationsnetzwerkadapter. Zum Beispiel umfasst eine drahtlose Netzwerkschnittstelle nebst einer Antenne zumindest eine Senderschaltung und eine Empfängerschaltung oder eine Sendeempfängerschaltung.

Benutzerschnittstelle 15 des mobilen Geräts 1 dient beispielsweise zur Ausgabe von Informationen an einen Benutzer und/oder zum Erfassen von Eingaben eines Benutzers. Wie oben offenbart, kann eine Benutzerschnittstelle eine Tastatur, eine Maus, einen Bildschirm, einen berührungsempfindlichen Bildschirm, einen Lautsprecher, ein Mikrofon, usw. sein.

Darüber hinaus steuert Prozessor 10 einen Sensor 16, der beispielsweise als optischer Sensor 16 ausgebildet ist.

Ein Beispiel für den optischen Sensor 16 ist eine Kamera oder ein CMOS-Sensor oder ein CCD-Sensor. Er kann beispielsweise zum Erfassen eines QR-Codes, eines Barcodes und/oder einer Zeichenfolge eingerichtet sein.

Es versteht sich, dass das mobile Gerät 1 auch mehrere Sensoren 16 umfassen kann.

Die Komponenten 10 bis 16 des mobilen Geräts 1 sind beispielsweise über einen oder mehrere Bussysteme (z.B. ein oder mehrere serielle und/oder parallele Busverbindungen) kommunikativ und/oder operativ miteinander verbunden.

Es versteht sich, dass das mobile Gerät 1 neben den Komponenten 10 bis 16 weitere Komponenten umfassen kann.

Fig. 2 ist eine schematische Darstellung einer beispielhaften Ausführungsform einer Telematikeinheit 2 für ein Nutzfahrzeug gemäß dem zweiten Aspekt der Erfindung.

Die Telematikeinheit 2 umfasst beispielhaft einen Prozessor 20 und verbunden mit dem Prozessor 20 einen ersten Speicher als Programm- und Datenspeicher 21, einen zweiten Speicher als Hauptspeicher 22, eine erste drahtlose Netzwerkschnittstelle 23, eine zweite drahtlose Netzwerkschnittstelle 14 und optional einen oder mehrere Sensoren 25.

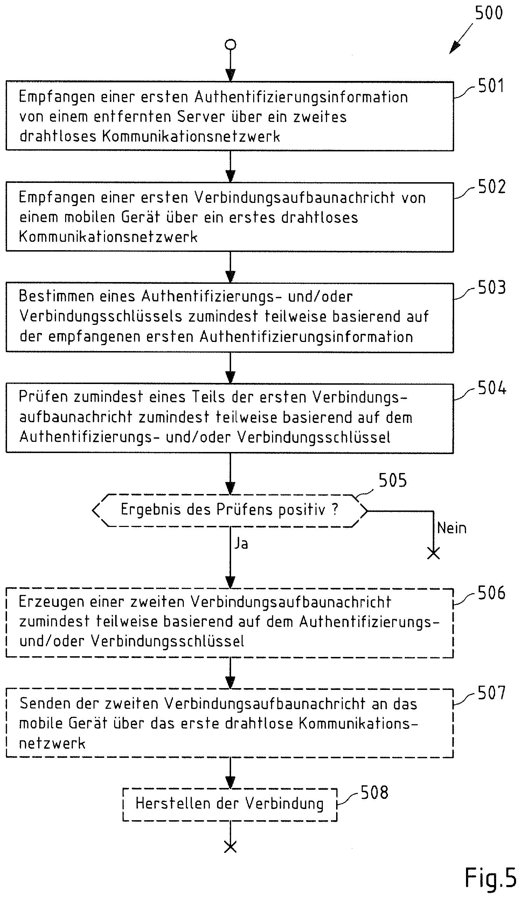

Prozessor 20 führt Programmanweisungen aus, die in Programmspeicher 21 gespeichert sind, und speichert beispielsweise Zwischenergebnisse oder ähnliches in Hauptspeicher 22. Telematikeinheit 2 kann auch mehrere Prozessoren umfassen. Der Programmspeicher 21 enthält beispielsweise Programmanweisungen eines Computerprogramms gemäß dem zweiten Aspekt der Erfindung, das Programmanweisungen umfasst, die den Prozessor 20 veranlassen, das Verfahren gemäß dem zweiten Aspekt der Erfindung (z.B. das Verfahren gemäß dem in Fig. 5 dargestellten Flussdiagram 500) auszuführen und/oder zu steuern, wenn der Prozessor 20 diese in Programmspeicher 21 gespeicherten Programmanweisungen ausführt. Programmspeicher 21 enthält ferner beispielsweise das Betriebssystem der Telematikeinheit 2.

Es versteht sich, dass Hauptspeicher 22 und Programmspeicher 21 auch als ein Speicher ausgebildet sein können. Alternativ können Hauptspeicher 22 und/oder Programmspeicher 21 jeweils durch mehrere Speicher gebildet werden. Ferner können Hauptspeicher 22 und/oder Programmspeicher 21 auch Teil des Prozessors 20 sein.

Prozessor 20 steuert die erste drahtlose Netzwerkschnittstelle 23, welche beispielsweise als Bluetooth-, WLAN- oder Zigbee-Schnittstelle ausgebildet ist, und die zweite drahtlose Netzwerkschnittstelle 24, welche beispielsweise als beispielsweise als GSM-, UMTS- und/oder LTE-Schnittstelle ausgebildet ist.

Die erste drahtlose Netzwerkschnittstelle 23 ist beispielsweise eingerichtet zur Kommunikation mit einem mobilen Gerät (z.B. dem in Fig. 3 dargestellten mobilen Gerät 1) über ein erstes drahtloses Kommunikationsnetzwerk (z.B. ein Bluetooth-, WLAN- oder Zigbee-Netzwerk. Ferner ist die erste drahtlose Netzwerkschnittstelle beispielsweise eingerichtet einen drahtlosen Zugangspunkt des ersten drahtlosen Kommunikationsnetzwerks bereitzustellen. Dagegen ist die zweite drahtlose Netzwerkschnittstelle 24 beispielsweise eingerichtet zur Kommunikation mit einem Server (z.B. dem in Fig. 3 dargestellten Server 5 eines Telematikdienstes) über ein zweites drahtloses Kommunikationsnetzwerk (z.B. eine GSM-, UMTS- und/oder LTE-Netzwerk).

Optional umfasst die Telematikeinheit 2 einen oder mehrere Sensoren 25. Diese dienen zum Beispiel zum Erfassen von Zustandsinformationen über das Nutzfahrzeug. Beispiele solcher Zustandsinformationen sind: Tankfüllstandinformationen, Reifendruckinformationen, Feuchtigkeitsinformationen, Temperaturinformationen, Türöffnungs- und -schließinformationen und/oder Positionsinformationen. Dementsprechend kann ein Tankfüllstandsensor, ein Reifendrucksensor, ein Feuchtigkeitssensor, ein Temperatursensor, ein Türöffnungs- und/oder - schließsensor und/oder ein Positionssensor Teil der Sensoren 25 sein. Alternativ oder zusätzlich ist auch denkbar, dass die Telematikeinheit 2 eine oder mehrere Schnittstellen zur Kommunikation mit solchen Sensoren 25 umfasst.

Die Komponenten 20 bis 25 der Telematikeinheit 2 sind beispielsweise über einen oder mehrere Bussysteme (z.B. ein oder mehrere serielle und/oder parallele Busverbindungen) kommunikativ und/oder operativ miteinander verbunden.

Es versteht sich, dass die Telematikeinheit 2 neben den Komponenten 20 bis 25 weitere Komponenten umfassen kann.

Fig. 3 ist eine schematische Darstellung einer beispielhaften Ausführungsform eines Systems 3 gemäß dem dritten Aspekt der Erfindung.

Das System 3 umfasst unter anderem das mobile Gerät 1 und die Telematikeinheit 2, welche in einem Sattelauflieger 4 als Beispiel für ein Nutzfahrzeug angeordnet ist, sowie optional Server 5.

Beispielhaft sind in Fig. 3 mehrere Sensoren 25 der Telematikeinheit 2 dargestellt, z.B. ein Positionssensor 25-1, ein Temperatursensor 25-2, ein Türöffnungs- und - schließsensor 25-3 sowie Reifendrucksensoren 25-4 und 25-5. Diese Sensoren 25 sind an dem Sattelauflieger 4 angeordnet. Ferner ist auf der Außenseite des Sattelaufliegers 4 ein optionaler QR-Code 40 angebracht.

Die Zugmaschine des Sattelaufliegers 4 ist in Fig. 3 mit dem Bezugszeichen 6 versehen. Sie ist in dem in Fig. 3 dargestellten Fall kein Bestandteil des Systems 3.

Das mobile Gerät 1 ist in Fig. 3 beispielhaft als Mobiltelefon dargestellt. Es versteht sich, dass es auch andere Ausgestaltungen haben kann. Beispielsweise kann das mobile Gerät 1 auch eine Smartwatch, ein persönlicher digitaler Assistent, ein tragbares Navigationsgerät, ein Navigationsgerät oder ein Bordcomputer der Zugmaschine 6, ein Tabletcomputer und/oder ein Laptopcomputer sein.

Der Server 5 ist ein Server eines Telematikdienstes und ist beispielsweise eingerichtet zum Bereitstellen einer Benutzeroberfläche für Benutzer des Telematikdienstes. Zum Beispiel kann ein Benutzer des Telematikdienstes über das Internet auf die Benutzeroberfläche zugreifen und Zustandsinformationen seiner Nutzfahrzeuge, die mit entsprechenden Telematikeinheiten (z.B. der Telematikeinheit 2) ausgestattet sind, abrufen und/oder die Telematikeinheiten seiner Nutzfahrzeuge konfigurieren. Zu diesem Zweck ist in System 3 eine drahtlose Verbindung 30 zwischen der Telematikeinheit 2 und dem Server 5 dargestellt. Über die Verbindung 30 kann die Telematikeinheit 2 erfasste Zustandsinformationen des Sattelaufliegers 4 an den Server 5 senden und Konfigurationsinformationen (z.B. eine erste Authentifizierungsinformation) von dem Server 5 empfangen. Die drahtlose Verbindung 30 ist eine Verbindung über das zweite drahtlose Kommunikationsnetzwerk.

Ferner ist in Fig. 3 eine drahtlose Verbindung 31 zwischen dem mobilen Gerät 1 und der Telematikeinheit 2 dargestellt. Die drahtlose Verbindung 31 ist eine direkte Verbindung zwischen dem mobilen Gerät 1 und einem durch die Telematikeinheit 2 bereitgestellten drahtlosen Zugangspunkt des ersten drahtlosen Kommunikationsnetzwerks. Die drahtlose Verbindung 31 ist beispielsweise eine WLAN-Verbindung, beispielsweise eine verschlüsselte WLAN-Verbindung (z.B. eine gemäß dem WPA- oder dem WPA2-Standard verschlüsselte WLAN-Verbindung). Der Aufbau dieser Verbindung wird unten beispielhaft anhand der Flussdiagramme 400 (vgl. Fig. 4) und 500 (vgl. Fig. 5) erläutert.

Optional kann eine drahtlose Verbindung 32 zwischen dem mobilen Gerät 1 und dem Server 5 bestehen, über die das mobile Gerät 1 beispielsweise eine erste Authentifizierungsinformation von dem Server 5 empfangen kann. Die drahtlose Verbindung 32 ist eine Verbindung über das zweite drahtlose Kommunikationsnetzwerk.

Zum Beispiel hat das zweite drahtlose Kommunikationsnetzwerk eine größere Reichweite und/oder Abdeckung als das erste drahtlose Kommunikationsnetzwerk.

Es versteht sich, dass die Verbindungen 30 und 32 nicht ausschließlich drahtlose Verbindungen sein müssen, sondern beispielsweise eine oder mehrere drahtlose Abschnitte (z.B. zwischen der Telematikeinheit 2 oder dem mobilem Gerät 1 und einer Basisstation des zweiten drahtlosen Kommunikationsnetzwerks) und eine oder mehrere drahtgebundene Abschnitte (z.B. zwischen der Basisstation und dem Server 5) umfassen können.

Im Folgenden wird beispielhaft angenommen, dass das erste drahtlose Kommunikationsnetzwerk ein erstes WLAN-Netzwerk und das zweite drahtlose Kommunikationsnetzwerk ein zweites Mobilfunknetzwerk ist.

Fig. 4 zeigt ein Flussdiagramm 400 eines Ausführungsbeispiels eines Verfahrens gemäß dem ersten Aspekt der Erfindung. Im Folgenden wird beispielhaft angenommen, dass die Schritte 401 bis 410 des Flussdiagramms 400 durch das mobile Gerät 1 in System 3 (vgl. Fig. 3) ausgeführt werden.

In einem Schritt 401 wird eine Telematikeinheitidentifizierungsinformation erfasst.

Die Telematikeinheitidentifizierungsinformation identifiziert beispielsweise einen durch die erste drahtlose Netzwerkschnittstelle 23 der Telematikeinheit 2 bereitgestellten WLAN-Zugangspunkt des ersten WLAN-Netzwerks.

Zum Beispiel wird die Telematikeinheitidentifizierungsinformation durch den QR-Code 40, der auf der Außenseite des Sattelaufliegers 4 angeordnet ist, repräsentiert. In diesem Beispiel wird der QR-Code 40 in Schritt 401 beispielsweise durch einen optischen Sensor 16 des mobilen Geräts 1 erfasst. Es versteht sich, dass die Erfindung nicht hierauf beschränkt ist und die Telematikeinheitidentifizierungsinformation, wie oben offenbart, auch auf eine andere Art und Weise erfasst werden kann.

Anschließend wird der drahtlose Zugangspunkt der Telematikeinheit 2 in einem Schritt 402 zumindest teilweise auf der in Schritt 401 erfassten Telematikeinheitidentifizierungsinformation identifiziert.

Eine Telematikeinheitidentifizierungsinformation, die den WLAN-Zugangspunkt der Telematikeinheit 2 identifiziert, ist beispielsweise eine SSID. Zum Beispiel wird in Schritt 402 die SSID der an dem mobilen Gerät verfügbaren WLAN-Zugangspunkte mit der als Telematikeinheitidentifizierungsinformation erfassten SSID verglichen, um den WLAN-Zugangspunkt der Telematikeinheit 2 unter den verfügbaren WLAN-Zugangspunkten zu identifizieren und/oder auszuwählen. Alternativ oder zusätzlich kann das mobile Gerät in Schritt 402 zum Beispiel eine Anfragenachricht mit der als Telematikeinheitidentifizierungsinformation erfassten SSID aussenden, um den WLAN-Zugangspunkt der Telematikeinheit 2 zu identifizieren. Dies ist beispielsweise vorteilhaft, wenn die Telematikeinheit 2 die SSID verbirgt und nicht von selber aussendet, sondern nur als Antwort auf eine solche Anfragenachricht.

In einem Schritt 403 wird eine erste Authentifizierungsinformation erhalten.

Die erste Authentifizierungsinformation ist, wie oben offenbart, beispielsweise ein Passwort oder eine Passphrase oder ein Teil eines Passworts oder einer Passphrase. Zum Beispiel ist die erste Authentifizierungsinformation ein Passwort oder eine Passphrase oder ein Teil eines Passworts oder einer Passphrase gemäß dem WPA- oder dem WPA2-Standard.

Zum Beispiel wird die erste Authentifizierungsinformation in Schritt 403 durch Benutzerschnittstelle 15 des mobilen Geräts als Benutzereingabe erhalten. Alternativ kann die erste Authentifizierungsinformation in Schritt 403 beispielsweise auch über die Verbindung 32 von dem Server 5 empfangen werden.

Dementsprechend kann das Erhalten der Authentifizierungsinformation in Schritt 403 separat von dem Erfassen der Telematikeinheitidentifizierungsinformation in Schritt 401 durch verschiedene Mittel des mobilen Geräts 1 und somit über verschiedene Kanäle erfolgen. So erfolgt das Erhalten der Authentifizierungsinformation beispielsweise durch die Benutzerschnittstelle 15 oder die drahtlose Netzwerkschnittstelle 14, wohingegen das Erfassen der Telematikeinheitidentifizierungsinformation zum Beispiel durch den Sensor 16 (z.B. einen optischen Sensor oder einen Funksensor)erfolgt. Dies ist, wie oben offenbart, vorteilhaft, um die Sicherheit zu erhöhen und zu verhindern, dass ein Angreifer gleichzeitig an beide Informationen gelangen kann.

Danach wird in einem Schritt 404 ein Authentifizierungs- und/oder Verbindungsschlüssel zumindest teilweise basierend auf der in Schritt 403 erhaltenen ersten Authentifizierungsinformation bestimmt.

Unter dem Authentifizierungs- und/oder Verbindungsschlüssel soll beispielsweise ein Schlüssel verstanden werden, der zur gegenseitigen Authentifizierung beim Aufbau der Verbindung 31 zwischen dem mobilen Gerät 1 und der Telematikeinheit 2 über das erste WLAN-Netzwerk dient. Alternativ oder zusätzlich soll unter dem Authentifizierungs- und/oder Verbindungsschlüssel beispielsweise ein Schlüssel verstanden werden, der zur Verschlüsselung einer Kommunikation über die Verbindung 31 dient.

Zum Beispiel ist der Authentifizierungs- und/oder Verbindungsschlüssel ein Pre-Shared Key gemäß dem WPA- oder dem WPA2-Standard oder ein Pairwise Transient Key gemäß dem WPA- oder WPA2-Standard.

Wie oben offenbart, kann der Authentifizierungs- und/oder Verbindungsschlüssel beispielsweise gemäß einem vorgegebenen kryptographischen Algorithmus zumindest teilweise basierend auf der ersten Authentifizierungsinformation bestimmt werden. Ein Beispiel für einen solchen kryptographischen Algorithmus ist beispielsweise ein PBKDF-Algorithmus (z.B. einer der Algorithmen PBKDF1 und PBKDF2). Dies ist beispielsweise vorteilhaft, um aus einem beliebigen Passwort oder einer beliebigen Passphrase einen Authentifizierungs- und/oder Verbindungsschlüssel mit einer vorgegebenen Länge zu erhalten.

Ferner kann die erste Authentifizierungsinformation zum Bestimmen des Authentifizierungs- und/oder Verbindungsschlüssels mit weiteren Informationen wie einer im Programmspeicher 11 des mobilen Geräts 1 gespeicherten zweiten Authentifizierungsinformation und/oder der Telematikeinheitidentifizierungsinformation kombiniert werden.

In einem Schritt 405 wird zumindest teilweise basierend auf dem Authentifizierungs- und/oder Verbindungsschlüssel eine erste Verbindungsaufbaunachricht erzeugt, die anschließend in einem Schritt 406 über das erste WLAN-Netzwerk an die Telematikeinheit gesendet wird.

Zum Beispiel dient die erste Verbindungsaufbaunachricht zum Aufbauen der Verbindung 31 zwischen dem mobilen Gerät 1 und dem drahtlosen Zugangspunkt der Telematikeinheit 2. Zum Beispiel ist die erste Verbindungsaufbaunachricht eine im Rahmen eines Handshakes gemäß dem WPA- oder WPA2-Standard zwischen dem mobilen Gerät 1 und der Telematikeinheit 2 gesendete Nachricht.

Wie oben offenbart, kann das Erzeugen der ersten Verbindungsaufbaunachricht in Schritt 405 das Bestimmen zumindest eines Teils der ersten Verbindungsaufbaunachricht gemäß einem vorgegebenen kryptographischen Algorithmus umfassen, wobei der Authentifizierungs- und/oder Verbindungsschlüssel als Schlüssel des kryptographischen Algorithmus verwendet wird. Zum Beispiel handelt es sich bei dem kryptographischen Algorithmus um eine kryptographische Hashfunktionen, die auf die erste Verbindungsaufbaunachricht oder einen Teil der ersten Verbindungsaufbaunachricht angewendet wird und deren Ergebnis der ersten Verbindungsaufbaunachricht beispielsweise als MIC oder MAC hinzugefügt wird, so dass die in Schritt 406 gesendete erste Verbindungsaufbaunachricht den MIC oder MAC enthält.

In einem optionalen Schritt 407 wird eine zweite Verbindungsaufbaunachricht über das erste WLAN-Netzwerk von der Telematikeinheit empfangen.

Zum Beispiel dient die zweite Verbindungsaufbaunachricht wie die erste Verbindungsaufbaunachricht zum Aufbauen der Verbindung 31 zwischen dem mobilen Gerät 1 und der Telematikeinheit 2. Zum Beispiel ist die zweite Verbindungsaufbaunachricht eine im Rahmen eines Handshakes gemäß dem WPA- oder WPA2-Standard zwischen dem mobilen Gerät 1 und der Telematikeinheit 2 gesendete Nachricht.

Anschließend wird die in Schritt 407 empfangene zweite Verbindungsaufbaunachricht in einem optionalen Schritt 408 zumindest teilweise basierend auf dem in Schritt 404 bestimmten Authentifizierungs- und/oder Verbindungsschlüssel geprüft.

Das Prüfen zumindest eines Teils der zweiten Verbindungsaufbaunachricht umfasst beispielsweise das Prüfen, ob die zweite Verbindungsaufbaunachricht zumindest teilweise basierend auf dem Authentifizierungs- und/oder Verbindungsschlüssel erzeugt wurde. Dadurch kann beispielsweise sichergestellt werden, dass der Authentifizierungs- und/oder Verbindungsschlüssel des mobilen Geräts 1 und der Telematikeinheit 2 zueinander korrespondieren. Es kann beispielsweise vorgesehen sein, dass die Verbindung nur in diesem Fall als sicher angesehen werden soll und somit hergestellt werden darf.

Das Ergebnis des Prüfens ist beispielsweise positiv, wenn das Prüfen ergibt, dass die zweite Verbindungsaufbaunachricht zumindest teilweise basierend auf dem Authentifizierungs- und/oder Verbindungsschlüssel erzeugt wurde. Andernfalls ist das Ergebnis beispielsweise negativ.

Zum Beispiel erfolgt das Prüfen in Schritt 408 gemäß einem vorgegebenen kryptographischen Algorithmus, wobei der Authentifizierungs- und/oder Verbindungsschlüssel als Schlüssel des kryptographischen Algorithmus verwendet wird. Ein Beispiel für einen solchen kryptographischen Algorithmus ist eine kryptographische Hashfunktionen, die auf die zweite Verbindungsaufbaunachricht oder einen Teil der zweiten Verbindungsaufbaunachricht angewendet wird. Als Ergebnis der kryptographischen Hashfunktionen wird beispielsweise ein MIC oder MAC erhalten, der mit einem in der empfangenen zweiten Verbindungsaufbaunachricht enthaltenen MIC oder MAC verglichen werden kann. Bei einer Übereinstimmung ist das Ergebnis der Prüfung beispielsweise positiv, andernfalls negativ.

Wenn das Ergebnis des Prüfens in Schritt 408 negativ ist, wird das Aufbauen der Verbindung 31 mit der Telematikeinheit 2 in einem optionalen Schritt 409 abgebrochen (z.B. verweigert). Andernfalls wird die Verbindung 31 in einem optionalen Schritt 410 hergestellt.

Fig. 5 zeigt ein Flussdiagramm 500 eines Ausführungsbeispiels eines Verfahrens gemäß dem zweiten Aspekt der Erfindung. Im Folgenden wird beispielhaft angenommen, dass die Schritte 501 bis 508 des Flussdiagramms 500 durch die Telematikeinheit 2 in System 3 (vgl. Fig. 3) ausgeführt werden.

In einem Schritt 501 wird eine erste Authentifizierungsinformation von dem Server 5 über die Verbindung 30 empfangen.

Die erste Authentifizierungsinformation entspricht beispielsweise der in Schritt 403 an dem mobilen Gerät 1 erhaltenen ersten Authentifizierungsinformation.

In einem Schritt 502 wird ferner eine erste Verbindungsaufbaunachricht von dem mobilen Gerät 1 über das erste WLAN-Netzwerk empfangen. Die erste Verbindungsaufbaunachricht ist beispielsweise die in Schritt 403 an die Telematikeinheit 2 gesendete erste Verbindungsaufbaunachricht.

In einem Schritt 503 wird ein Authentifizierungs- und/oder Verbindungsschlüssel zumindest teilweise basierend auf der in Schritt 501 empfangenen ersten Authentifizierungsinformation bestimmt.

Das Bestimmen des Authentifizierungs- und/oder Verbindungsschlüssels durch die Telematikeinheit 2 in Schritt 503 entspricht beispielsweise dem Bestimmen des Authentifizierungs- und/oder Verbindungsschlüssels durch das mobile Gerät in Schritt 404. Gegebenenfalls kann hierfür in Programmspeicher 21 der Telematikeinheit 2 eine zweite Authentifizierungsinformation gespeichert sein.

Anschließend wird in einem Schritt 504 die in Schritt 502 empfangene erste Verbindungsnachricht zumindest teilweise basierend auf dem in Schritt 503 bestimmten Authentifizierungs- und/oder Verbindungsschlüssel geprüft.

Das Prüfen der ersten Verbindungsaufbaunachricht durch die Telematikeinheit 2 in Schritt 504 entspricht beispielsweise dem Prüfen der zweiten Verbindungsaufbaunachricht durch das mobile Gerät in Schritt 408. Das Ergebnis des Prüfens ist beispielsweise nur dann positiv, wenn das Prüfen ergibt, dass die zweite Verbindungsaufbaunachricht zumindest teilweise basierend auf dem in Schritt 503 bestimmten Authentifizierungs- und/oder Verbindungsschlüssel erzeugt wurde. Andernfalls ist das Ergebnis beispielsweise negativ.

Zusätzlich kann beispielsweise vorgesehen sein, dass zumindest bei einem erstmaligen Aufbau der Verbindung 31 in Schritt 504 weitere Bedingungen geprüft werden. Wie oben offenbart, kann das Prüfen in Schritt 504 ferner zumindest teilweise in Abhängigkeit einer Position der Telematikeinheit 2 (z.B. der zuletzt von einem Positionssensor 25-1 der Telematikeinheit 2 erfassten Position) und/oder einem Zeitpunkt (z.B. der aktuellen Uhrzeit und/oder dem aktuellen Datum) und/oder einer MAC-Adresse des mobilen Geräts 1 erfolgen. Zum Beispiel kann vorgegeben sein, dass das Ergebnis des Prüfen nur in einem bestimmten geographischen Bereich (z.B. auf einem Betriebshof eines Spediteurs) und/oder in einem bestimmten Zeitraum (z.B. zu Betriebsbeginn eines Spediteurs) und/oder für mobile Geräte mit einer vorgegebenen MAC-Adresse positiv sein darf. Andernfalls ist das Ergebnis beispielsweise negativ.

Wenn das Ergebnis des Prüfens in Schritt 504 negativ ist, wird das Aufbauen der Verbindung 31 mit dem mobilen Gerät 1 in einem optionalen Schritt 505 abgebrochen (z.B. verweigert). Andernfalls wird das Aufbauen der Verbindung 31 mit einem optionalen Schritt 506 fortgesetzt oder die Verbindung 31 hergestellt (vgl. optionaler Schritt 508).

In dem optionalen Schritt 506 wird eine zweite Verbindungsaufbaunachricht zumindest teilweise basierend auf dem in Schritt 503 bestimmten Authentifizierungs- und Verbindungsschlüssel erzeugt. Anschließend wird die zweite Verbindungsaufbaunachricht in einem optionalen Schritt 507 über das WLAN-Netzwerk an das mobile Gerät 1 gesendet.

Die zweite Verbindungsaufbaunachricht wird durch die Telematikeinheit 2 in Schritt 506 beispielsweise wie die erste Verbindungsaufbaunachricht durch das mobile Gerät 1 in Schritt 405 erzeugt. Ferner entspricht die in Schritt 507 an das mobile Gerät 1 gesendete zweite Verbindungsaufbaunachricht der in Schritt 407 an dem mobilen Gerät empfangenen zweiten Verbindungsaufbaunachricht.

In einem optionalen Schritt 508 wird die Verbindung 31 hergestellt.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Flussdiagrammen ist nicht zwingend, alternative Abfolgen der Verfahrensschritte sind denkbar - soweit nicht anders angegeben. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren zum Aufbauen einer Verbindung (31) eines mobilen Geräts (1) mit einer Telematikeinheit (2) eines Nutzfahrzeugs (4) über ein erstes drahtloses Kommunikationsnetzwerk, wobei das Verfahren durch das mobile Gerät (1) ausgeführt wird, das Verfahren umfassend:
- Erfassen (401) einer Telematikeinheitidentifizierungsinformation, wobei die Telematikeinheitidentifizierungsinformation durch einen optischen Sensor (16) erfasst wird;
- Identifizieren (402) der Telematikeinheit (2) zumindest teilweise basierend auf der Telematikeinheitidentifizierungsinformation;
- Erhalten (403) einer ersten Authentifizierungsinformation, wobei die erste Authentifizierungsinformation durch Erfassen einer Benutzereingabe an dem mobilen Gerät (1) erhalten wird;
- Bestimmen (404) eines Authentifizierungs- und/oder Verbindungsschlüssels zumindest teilweise basierend auf der erhaltenen Authentifizierungsinformation, wobei das Bestimmen des Authentifizierungs- und/oder Verbindungsschlüssels ferner auf der erfassten Telematikeinheitidentifizierungsinformation basiert;
- Erzeugen (405) einer ersten Verbindungsaufbaunachricht zumindest teilweise basierend auf dem Authentifizierungs- und/oder Verbindungsschlüssel;
- Senden (406) der ersten Verbindungsaufbaunachricht an die Telematikeinheit (2) über das erste drahtlose Kommunikationsnetzwerk.

2. Verfahren nach Anspruch 1, das Erzeugen (405) der ersten Verbindungsaufbaunachricht umfassend:
- Bestimmen zumindest eines Teils der ersten Verbindungsaufbaunachricht gemäß einem vorgegebenen kryptographischen Algorithmus, wobei der Authentifizierungs- und/oder Verbindungsschlüssel als Schlüssel des kryptographischen Algorithmus verwendet wird.

3. Verfahren nach einem der Ansprüche 1 und 2, wobei die Telematikeinheitidentifizierungsinformation durch das Nutzfahrzeug (4) oder eine Komponente des Nutzfahrzeugs (4) bereitgestellt wird.

4. Verfahren nach einem der Ansprüche 1 bis 3, wobei die Telematikeinheitidentifizierungsinformation durch ein an dem Nutzfahrzeug angebrachtes Nummernschild oder einen Aufdruck und/oder Aufkleber an einem Aufbau des Nutzfahrzeugs bereitgestellt wird.

5. Verfahren nach einem der Ansprüche 1 bis 4, wobei das Bestimmen des Authentifizierungs- und/oder Verbindungsschlüssels ferner auf einer in einem Speicher (11) des mobilen Geräts (1) gespeicherten zweiten Authentifizierungsinformation basiert.

6. Verfahren nach einem der Ansprüche 1 bis 5, wobei die Telematikeinheitidentifizierungsinformation einer Kennung eines drahtlosen Zugangspunkts der Telematikeinheit (2) repräsentiert.

7. Verfahren nach einem der Ansprüche 1 bis 6, das Verfahren ferner umfassend:
- Empfangen (407) einer zweiten Verbindungsaufbaunachricht zum Aufbauen der Verbindung (31) von der Telematikeinheit (2) über das erste drahtlose Kommunikationsnetzwerk;
- Prüfen (408) zumindest eines Teils der zweiten Verbindungsaufbaunachricht zumindest teilweise basierend auf dem Authentifizierungs- und/oder Verbindungsschlüssel.

8. Mobiles Gerät (1) eingerichtet zur Ausführung des Verfahrens nach einem der Ansprüche 1 bis 7.

9. Verfahren zum Aufbauen einer Verbindung (31) einer Telematikeinheit (2) eines Nutzfahrzeugs (4) mit einem mobilen Gerät (1) über ein erstes drahtloses Kommunikationsnetzwerk, wobei das Verfahren durch die Telematikeinheit (2) ausgeführt wird, das Verfahren umfassend:
- Bereitstellen, durch das Nutzfahrzeug (4) oder eine Komponente des Nutzfahrzeugs (4), einer Telematikeinheitidentifizierungsinformation als graphische Information zum Identifizieren eines drahtlosen Zugangspunkts der Telematikeinheit (2);
- Empfangen (501) einer ersten Authentifizierungsinformation von einem entfernten Server (5) über ein zweites drahtloses Kommunikationsnetzwerk;
- Empfangen (502) einer ersten Verbindungsaufbaunachricht von einem mobilen Gerät (1) über das erste drahtlose Kommunikationsnetzwerk;
- Bestimmen (503) eines Authentifizierungs- und/oder Verbindungsschlüssels zumindest teilweise basierend auf der empfangenen ersten Authentifizierungsinformation, wobei das Bestimmen (503) des Authentifizierungs- und/oder Verbindungsschlüssels ferner auf der Telematikeinheitidentifizierungsinformation basiert;
- Prüfen (504) zumindest eines Teils der ersten Verbindungsaufbaunachricht zumindest teilweise basierend auf dem Authentifizierungs- und/oder Verbindungsschlüssel.

10. Verfahren nach Anspruch 9, wobei das Bestimmen (503) des Authentifizierungs- und/oder Verbindungsschlüssels ferner auf einer in einem Speicher (21) der Telematikeinheit (2) gespeicherten zweiten Authentifizierungsinformation basiert.

11. Verfahren nach einem der Ansprüche 9 und 10, wobei die Telematikeinheitidentifizierungsinformation durch ein an dem Nutzfahrzeug angebrachtes Nummernschild oder einen Aufdruck und/oder Aufkleber an einem Aufbau des Nutzfahrzeugs bereitgestellt wird.

12. Telematikeinheit (2) für ein Nutzfahrzeug (4), wobei die Telematikeinheit (2) eingerichtet ist zur Ausführung des Verfahrens nach einem der Ansprüche 9 bis 11.

13. Computerprogramm, umfassend Programmanweisungen, die dazu ausgebildet sind, bei Ausführung durch mindestens einen Prozessor (10, 20) eine Vorrichtung (1, 2) zu veranlassen, das Verfahren nach einem der Ansprüche 1 bis 7 oder nach einem der Ansprüche 9 bis 11 auszuführen.

14. System (3), umfassend:
- eine Telematikeinheit (2) für ein Nutzfahrzeug (4) nach Anspruch 12, und
- ein mobiles Gerät (1) nach Anspruch 8.

## Claims

1. Method for establishing a connection (31) of a mobile device (1) to a telematics unit (2) of a commercial vehicle (4) via a first wireless communication network, wherein the method is carried out by the mobile device (1), the method comprising:
- detecting (401) telematics unit identification information, wherein the telematics unit identification information is detected by an optical sensor (16);
- identifying (402) the telematics unit (2) at least in part based on the telematics unit identification information;
- obtaining (403) a first authentication information, wherein the first authentication information is obtained by detecting a user input at the mobile device (1);
- determining (404) an authentication key and/or a connection key at least in part based on the obtained authentication information, wherein determining the authentication key and/or connection key is further based on the detected telematics unit identification information;
- generating (405) a first connection establishment message at least in part based on the authentication key and/or connection key;
- sending (406) the first connection establishment message to the telematics unit (2) via the first wireless communication network.

2. Method according to claim 1, generating (405) the first connection establishment message comprising:
- determining at least a portion of the first connection establishment message according to a predetermined cryptographic algorithm, wherein the authentication key and/or connection key is used as the key of the cryptographic algorithm.

3. Method according to any one of claims 1 and 2, wherein the telematics unit identification information is provided by the commercial vehicle (4) or a component of the commercial vehicle (4).

4. Method according to any one of claims 1 to 3, wherein the telematics unit identification information is provided by a number plate affixed to the commercial vehicle or a print and/or sticker on a body of the commercial vehicle.

5. Method according to any one of claims 1 to 4, wherein determining the authentication key and/or connection key is further based on second authentication information stored in a memory (11) of the mobile device (1).

6. Method according to any one of claims 1 to 5, wherein the telematics unit identification information represents an identifier of a wireless access point of the telematics unit (2).

7. Method according to any one of claims 1 to 6, the method further comprising:
- receiving (407) a second connection establishment message for establishing the connection (31) from the telematics unit (2) via the first wireless communication network;
- verifying (408) at least a portion of the second connection establishment message at least in part based on the authentication key and/or connection key.

8. A mobile device (1) configured for performing the method of any one of claims 1 to 7.

9. Method for establishing a connection (31) of a telematics unit (2) of a commercial vehicle (4) with a mobile device (1) via a first wireless communication network, wherein the method is performed by the telematics unit (2), the method comprising:
- providing, by the commercial vehicle (4) or a component of the commercial vehicle (4), telematics unit identification information as graphical information for identifying a wireless access point of the telematics unit (2);
- receiving (501) a first authentication information from a remote server (5) via a second wireless communication network;
- receiving (502) a first connection establishment message from a mobile device (1) via the first wireless communication network;
- determining (503) an authentication key and/or a connection key at least in part based on the received first authentication information, wherein determining (503) the authentication key and/or connection key is further based on the telematics unit identification information;
- verifying (504) at least a portion of the first connection establishment message at least in part based on the authentication key and/or connection key.

10. Method according to claim 9, wherein determining (503) the authentication key and/or connection key is further based on second authentication information stored in a memory (21) of the telematics unit (2).

11. Method according to any one of claims 9 and 10, wherein the telematics unit identification information is provided by a number plate affixed to the commercial vehicle or a print and/or sticker on a body of the commercial vehicle.

12. Telematics unit (2) for a commercial vehicle (4), wherein the telematics unit (2) is configured for performing the method according to any one of claims 9 to 11.

13. Computer program comprising program instructions configured for, when executed by at least one processor (10, 20), causing a device (1, 2) to execute the method according to any one of claims 1 to 7 or according to any one of claims 9 to 11.

14. System (3) comprising:
- a telematics unit (2) for a commercial vehicle (4) according to claim 12, and
- a mobile device (1) according to claim 8.

## Revendications

1. Procédé pour établir une connexion (31) d'un dispositif mobile (1) avec une unité télématique (2) d'un véhicule utilitaire (4) via un premier réseau de communication sans fil, le procédé étant exécuté par le dispositif mobile (1), le procédé comprenant :
- détecter (401) une information d'identification d'unité télématique, l'information d'identification d'unité télématique étant détectée par un capteur optique (16) ;
- identifier (402) l'unité télématique (2) au moins en partie sur la base de l'information d'identification d'unité télématique ;
- obtenir (403) une première information d'authentification, la première information d'authentification étant obtenue en détectant une entrée d'utilisateur au niveau du dispositif mobile (1) ;
- déterminer (404) une clé d'authentification et/ou une clé de connexion au moins en partie sur la base de l'informations d'authentification obtenue, la détermination de la clé d'authentification et/ou clé de connexion étant en outre basée sur l'information d'identification d'unité télématique détectée ;
- générer (405) un premier message d'établissement de connexion basé au moins en partie sur la clé d'authentification et/ou clé de connexion ;
- envoyer (406) le premier message d'établissement de connexion à l'unité télématique (2) via le premier réseau de communication sans fil.

2. Procédé selon la revendication 1, la génération (405) du premier message d'établissement de connexion comprenant :
- déterminer au moins une partie du premier message d'établissement de connexion selon un algorithme cryptographique prédéterminé, en utilisant la clé d'authentification et/ou clé de connexion comme clé de l'algorithme cryptographique.

3. Procédé selon l'une des revendications 1 et 2, dans lequel l'information d'identification d'unité télématique est fournie par le véhicule utilitaire (4) ou un composant du véhicule utilitaire (4).

4. Procédé selon l'une des revendications 1 à 3, dans lequel l'information d'identification d'unité télématique est fournie par une plaque d'immatriculation apposée au véhicule utilitaire ou par une impression et/ou un autocollant au niveau d'une partie du véhicule utilitaire.

5. Procédé selon l'une des revendications 1 à 4, dans lequel la détermination de la clé d'authentification et/ou clé de connexion est en outre basée sur une deuxième information d'authentification stockée dans une mémoire (11) du dispositif mobile (1).

6. Procédé selon l'une des revendications 1 à 5, dans lequel l'information d'identification d'unité télématique représente un identifiant d'un point d'accès sans fil de l'unité télématique (2).

7. Procédé selon l'une des revendications 1 à 6, le procédé comprenant en outre :
- recevoir (407) un deuxième message d'établissement de connexion pour établir la connexion (31) depuis l'unité télématique (2) via le premier réseau de communication sans fil ;
- vérifier (408) au moins une partie du deuxième message d'établissement de connexion au moins en partie sur la base de la clé d'authentification et/ou clé de connexion.

8. Appareil mobile (1) agencé pour mettre en oeuvre le procédé selon l'une des revendications 1 à 7.

9. Procédé pour établir une connexion (31) d'une unité télématique (2) d'un véhicule utilitaire (4) avec un dispositif mobile (1) via un premier réseau de communication sans fil, le procédé étant mis en oeuvre par l'unité télématique (2), le procédé comprenant :
- fournir, par le véhicule utilitaire (4) ou un composant du véhicule utilitaire (4), une information d'identification d'unité télématique sous forme d'information graphique pour identifier un point d'accès sans fil de l'unité télématique (2) ;
- recevoir (501) une première information d'authentification d'un serveur distant (5) via un deuxième réseau de communication sans fil ;
- recevoir (502) un premier message d'établissement de connexion d'un dispositif mobile (1) via le premier réseau de communication sans fil ;
- déterminer (503) une clé d'authentification et/ou clé de connexion au moins en partie sur la base de la première information d'authentification reçue, la détermination (503) de la clé d'authentification et/ou clé de connexion étant en outre basée sur une information d'identification d'unité télématique ;
- vérifier (504) au moins une partie du premier message d'établissement de connexion au moins en partie sur la base de la clé d'authentification et/ou clé de connexion.

10. Procédé selon la revendication 9, dans lequel la détermination (503) de la clé d'authentification et/ou clé de connexion est en outre basée sur une deuxième information d'authentification stockée dans une mémoire (21) de l'unité télématique (2).

11. Procédé selon l'une des revendications 9 et 10, dans lequel l'information d'identification d'unité télématique est fournie par une plaque d'immatriculation apposée au véhicule utilitaire ou par une impression et/ou un autocollant au niveau d'une partie du véhicule utilitaire.

12. Unité télématique (2) pour un véhicule utilitaire (4), l'unité télématique (2) étant configurée pour mettre en oeuvre le procédé selon l'une des revendications 9 à 11.

13. Programme d'ordinateur comprenant des instructions de programme configurées pour, lors d'une exécution par au moins un processeur (10, 20), amener un dispositif (1, 2) à mettre en oeuvre le procédé selon l'une des revendications 1 à 7 ou selon l'une des revendications 9 à 11.

14. Système (3) comprenant :
- une unité télématique (2) pour un véhicule utilitaire (4) selon la revendication 12, et
- un dispositif mobile (1) selon la revendication 8.
